# EUROPEAN PATENT SPECIFICATION

(11) **EP 1 378 174 B1**
(45) Date of publication and mention of the grant of the patent: **27.08.2008**
(21) Application number: 03014797.9
(22) Date of filing: 30.06.2003
(51) Int. Cl.: A23G 3/00

(54) **A food product which includes an hermetically sealed case of edible material with a moist filling**
Nahrungsmittel mit hermetisch abgeschlossener essbarer Hülle mit einer feuchten Füllung
Denrée alimentaire contenant un récipient en matière comestible fermé hermeticalement avec une garniture humide

(30) Priority: 01.07.2002 EP 02425434
(43) Date of publication of application: 07.01.2004
(73) Proprietor: SOREMARTEC S.A., 6700 Schoppach-Arlon (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Contento, Francesco, 12051 Alba (Cuneo) (IT); Canicatti, Marcello, 12051 Alba (Cuneo) (IT); Mazza, Gianfranco, 12060 Roddi d' Alba (Cuneo) (IT)
(74) Representative: Rambelli, Paolo

(56) References cited:
- EP-A- 0 166 446
- DE-A- 2 112 467
- GB-A- 1 417 797
- US-A- 2 682 471

## Description

The present invention relates to a food product which includes an edible case containing a moist filling, this preferably being yoghurt based.

The invention relates to the problem involved in providing a filled food product in which the filling has a high level of water activity (A_{w}), in particular above 0.90 and preferably above 0.94 and in which the aforesaid values of A_{w} are maintained during lengthy periods in which the product is stored.

This problem is particularly relevant with regard to a yoghurt-based filling, which contains live milk ferments, since it is generally considered imperative to preserve a high level of water activity in order to keep the milk ferments alive.

WO95/22906 deals with the problem of providing a food product with a dairy-based, in particular yoghurt-based filling, which contains live milk ferments, which is perceived by the consumer as a fresh product, thanks to its organoleptic qualities, but is categorised by food standards as a "chilled" product, which can be stored for a few weeks, preferably from 4 to 6 weeks, at a temperature of between 4 and 6°C.

In this context, this document describes products such as baked goods of a sandwich-type structure or products such as chocolate bars, either of which include a filling based on a fermented milk product, containing live milk ferments with a water activity of between 0.75 and 0.86, which can stabilize, on contact with the baked item or the chocolate casing, at values of around 0.75 to 0.81 and which also have a relatively high fat content (15-35% by weight) in order to provide a water-in-oil emulsion.

The aforesaid document specifically requires that a filling with a relatively low initial water activity level be used and, to this end, uses additives which limit water activity and a method for producing the filling which involves an inversion step, whereby an oil-in-water emulsion is converted into a water-in-oil emulsion.

Considering the need to incorporate appropriate edible fats and sugars into the filling (10-40% by weight) acting to depress water activity, the yoghurt content is generally limited to values of around 25 to 50% by weight.

The document WO98/18337 also deals with the problem of providing a solid food item which includes a filling based on fermented or unfermented dairy products which is sufficiently stable and has preservation characteristics such as those described above.

In this case, a food product is proposed which includes a filling, which is at least partially coated in a protective layer, constituted by an oil-in-water emulsion, based on fermented or unfermented dairy products and including vegetable fat and - for their emulsifying properties - esters of fatty acids and saccharose, in which the filling mass is whipped so as to increase by over 30% by volume and has between 60 and 85% of dry extract by weight.

The use of sugars to lower the water activity of the filling leads to a reduction in the value of water activity to between 0.65 and 0.9%.

WO0O/70960 describes a food product which includes a solid block of chocolate in contact with a moist mass with a free local water content of between 45% and 88%, with the chocolate having a fat content of between 43% and 80%, containing less than 18% of dried and defatted cocoa, less than 17% of skimmed milk powder and at least 13% of sugars.

EP 0 166 446 A and DE 21 12 467 describe processes for obtaining food products comprising an edible shell containing a hydrated or alcoholic liquid, wherein the shell reduces or the evaporation of water and/or alcohol.

The application of the described preparation processes to products with a hydrated filling having a high water activity (e.g. > 0.94) can reduce the evaporation from the inside to the outside; however, it does not assure an impermeability which is steady and such to maintain the A_{w} to a high and constant value during a six weeks storage period at 0-4°C. In the specific case of a hydrated filling consisting of yoghurt with alive and viable milk ferments, it is of fundamental importance and it constitutes a binding requirement to ensure that the A_{w} is maintained at a constant high value in order to maintain the viability of said ferments.

The subject of the present invention is a food product which includes a chocolate casing containing a moist filling, characterised in that the said casing is hermetic and includes at least two continuous layers, of water-repellent edible material over its entire inner surface, and in which the water activity of the said filling is greater than 0.9 and preferably of a value of between 0.94 and 0.99%.

The invention relates to a food product in which the filling is either yoghurt or a yoghurt-based compound containing alive and viable milk ferments and in which the alive and viable milk ferments content is maintained at a value of the order of over 10⁷ per gram of product for storage periods of the order of at least two weeks and preferably of from four to six weeks at a storage temperature of between 0 and 4°C.

Further characteristics of the food product of the invention are defined in the Claims which follow.

In the appended drawings, provided by way of non-limitative example:
Figure 1 is a perspective view of a bar-type food product according to the invention; and
Figure 2 is a section through the plane II-II of Figure 1.

In the embodiment illustrated in the drawings, the bar-type food product includes an airtight casing 2, formed by a moulded shell 4, hermetically closed by a flat lid 6.

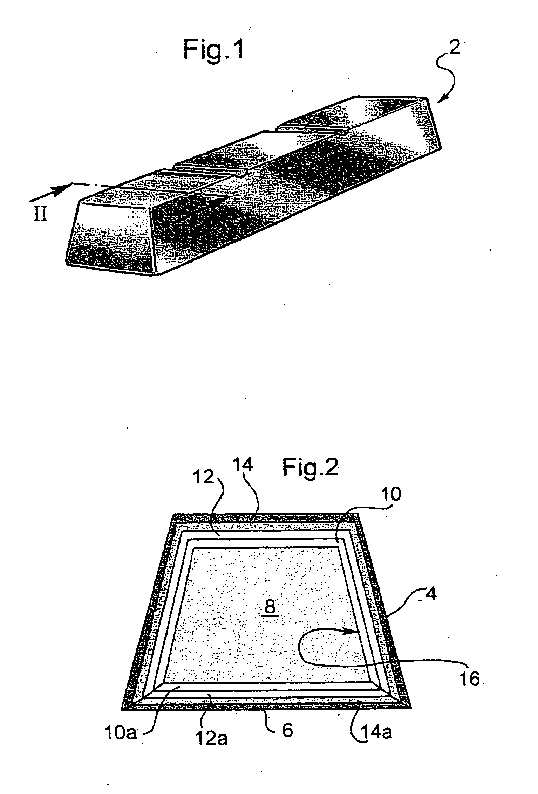

The shell 4 and the lid 6 are made of a mouldable food product, this term being intended to describe any material which can be moulded or shaped, either in a liquid or viscous state, by pouring it into a mould, for example and then draining it, into a shell of the type shown in Figure 1 and then stabilized in this shape, typically by cooling it.

According to the invention the material used is chocolate, a term which must not be interpreted here as exclusively limited to confections which are allowed to be called chocolate under the legislation on food products in certain countries.

The term chocolate - here used to indicate a mouldable material - should thus be seen to include any product or substance having rheological characteristics similar or substantially equivalent to those of chocolate.

By way of example, the chocolate constituting the shell could include:
- a minimum fat content of 25% by weight
- from 20 to 65% of sugars by weight
- from 0 to 40% of dry milk substances
- from 0 to 50% of cocoa paste.

The shell 4 can be produced by the known method of pouring the chocolate into a mould and subsequently draining and cooling it, possibly repeating this process at least once in order to achieve a shell of the desired thickness. The thickness of the wall of the shell 4 is of a few millimetres (1-3 mm for example) but must be strong enough to contain a filling 8, the characteristics of which will be described later.

The filling 8 is insulated from the shell 4 and the lid 6 by an impermeable layer, generally indicated 6, of an edible hydrophobic.

This material is an edible fat, which forms a barrier to liquids and crystallizes to form a flexible coating (polymorphic fat). In particular, this material is preferably an edible fat with a melting point of between 34 and 38°C.

Commercially produced fat preparations can be used such as, for example, cocoa butter, Shea butter fractions, illipé, Sal oil or mixtures thereof, provided these are substantially without hydrosoluble components, and in particular sugar free.

The impermeable coating 16 is made up of a plurality of layers - generally two to four - applied in sequence. It is preferable to apply several layers in sequence since this improves the barrier effect between the outer casing 2 and the filling 8 by covering imperfections in the first layer which occur inevitably as a result of bubbles, cracks or to uneven distribution of the material; in addition, it is preferable to build up the required thickness of the impermeable coating, typically of around 0.2-1 mm, in several layers since the viscous nature of the typical fatty mixtures used makes it difficult to achieve the required thickness in one layer.

In order to ensure that the coating 16 bonds to the material constituting the casing 2, it is preferable to use a first layer 14, in contact with the shell 4 and 14a in contact with the lid 6, of cocoa butter; subsequent layers 12, 12a and 10, 1O can be made up of cocoa butter or, preferably of one of the other fats mentioned above or a combination of any of those with cocoa butter.

The characteristics of the impermeable coating 16 are such that, when it comes into direct contact with a filling having a water activity value of 0.91 or more there is no transfer of moisture between the two such as could reduce the water activity value to below 0.91 or preferably below 0.94.

The filling can be composed of an edible substance having a water activity value of over 0.90, preferably of between 0.94 and 0.99 and having a liquid, creamy or paste-like consistency.

The filling 8 is a yoghurt-based confection which includes alive and viable milk ferments (lactic acid bacteria), in a concentration of over ten millions per gram of product, preferably with a yoghurt content of over 70% and more preferably of over 80%, the remaining percentage being made up essentially of sugars, possibly sweeteners, flavouring and possibly additional ingredients such as fruit.

The yoghurt component is made according to conventional methods, using either full fat or skimmed milk (65-99.99 % by weight with reference to the total quantity of yoghurt), which has been pasteurised or undergone UHT sterilization and then fermented by the addition of milk bacteria such as Lactobacillus bulgaricus, Streptococcus thermophilus or possibly selected cultures of probiotic micro-organisms, such as Lactobacillus acidophilus.

The yoghurt mixture can also contain additional milk protein, up to about 8% by weight or cream, up to 10% by weight.

Prebiotic ingredients such as fructo-oligosaccharides, in particular soluble inulin fibres, can also be included in the yoghurt; the said prebiotic ingredients being suitable to encourage the development of probiotic microorganisms.

The total fat content of the yoghurt is preferably not over 10% and preferably under 5% by weight, while the pH value is generally of between 3.7 and 5.

The total quantity of sugars and sweeteners in the filling, and especially in the yoghurt, is generally not over 20% by weight. It is preferable to use sugars such as saccharose, glucose, fructose or lactose, either singly or as mixtures (such as honey and grape sugars). Polyalcohols, sorbitol, or glycerine and high-performance sweeteners can also be included.

The yoghurt compound is generally free of thickeners.

Any additional ingredients (which have already been biologically stabilized) are added to the yoghurt mixture under biologically controlled conditions so as to avoid any contamination (filtered air).

It is preferable for the yoghurt mixture to have a relatively high degree of viscosity, preferably over 3,000 cPs (Brookfield viscosimeter, model RVTD, impeller 5 at 6°C), In order to achieve this, without resorting to thickening agents, the required value of viscosity can be produced by selecting ferments specifically intended to give high viscosity, which are generally available in the trade.

As stated earlier, once the sugars have been added, the yoghurt-based filling mixture has a value A_{w} which is still greater than 0.9 and preferably between 0.94 and 0.99, with values of between 0.95 and 0.98 being the optimum choice.

A characteristic of the food product of the invention is constituted by the fact that the aforesaid water activity is maintained at the values specified above in the finished product when it is kept at a temperature of between 0 and 4°C for a period of around four to six weeks; if the filling is yoghurt, the product maintains a concentration of live and viable milk ferments of over ten million per gram of product.

A food product of the type shown in the drawings can be produced by a method which involves a first step of forming the shell, indicated 4, by pouring the mouldable material into a shaped mould, then draining it and cooling it, this operation possibly being followed by a second similar moulding step in order to build up the desired thickness.
The impermeable coating 16, which without discontinuities covers the shell 4, is applied to the surface of the shell in a step involving moulding, draining and cooling and repeated for each intended layer (for example the three layers 14, 12, 10). The fat mixture is preferably poured at around 33-34°C and cooled to around 23-24°C.

The filling 8 is then poured into the coated cavity of the shell 4, preferably until it is substantially full. The following steps include spraying the fat material constituting the impermeable coating onto the surface of the filling. The fat mixture is applied by spraying, preferably at around 33-34°C and is then cooled, preferably to around 27-28°.

This spray application is repeated, always after cooling the preceding layer, for as many sealing layers as are required (14a, 12a, 10a, for example). The closing lid 6 is then formed by casting the mouldable material (chocolate) - twice if necessary - onto the coating of fat.

It is clear that the scope of the invention also includes food products formed by two half-shells of mouldable material, each of which has a layer impermeable to liquids achieved by the moulding, draining and cooling steps described above, and each containing a filling mass, coupled together around their openings and then hermetically sealed.

## Claims

1. A food product comprising a chocolate casing containing a moist filling (8), wherein said casing (2) is hermetically sealed (4, 6) and includes at least two continuous coating layers, of an edible hydrophobic fat material (16) over its entire inner surface, **characterised in that** the filling (8) is yoghurt-based with a concentration of live and viable milk ferments of above 10⁷ per gram of filling after the product has been kept at a temperature of 0°C to 4°C for a period of four to six weeks and **in that** the said filling (8) has a water activity value of above 0.90.

2. A food product according to Claim 1, in which the said water activity value is of between 0.94 and 0.99 and wherein the initial water activity value is maintained substantially unchanged during storage of the food product for six weeks at the temperature of 0-4°C.

3. A food product according to Claim 1, **characterised in that** the said yoghurt-based filling includes sugars, in quantities not over 20% by weight of the total weight of the filling.

4. A food product according to Claim 3, **characterised in that** the said sugars are selected from a group consisting of saccharose, glucose, fructose, lactose or mixtures thereof.

5. A food product according to Claim 4, **characterised in that** the said filling includes milk protein in quantities of up to 8% by weight, with reference to the total weight of the filling mass.

6. A food product according to any Claim from 1 to 5, **characterised in that** the filling includes edible fat derived from milk in a quantity not greater than 10% by weight.

7. A food product according to any of Claims from 1 to 6, **characterised in that** the said filling also includes sweeteners, prebiotic ingredients, probiotic ingredients and/or flavourings.

8. A food product according to Claim 7, **characterised in that** the said prebiotic ingredients include soluble fibres.

9. A food product according to any Claim from 1 to 8, **characterised in that** the said filling has a viscosity value of over 3,000 cPs (Brookfield viscosimeter, model RVTD, impeller 5) at 6°C.

10. A food product according to any preceding Claim, **characterised in that** the said casing (2) includes a shaped shell (4) and a lid (6) sealing the opening of the said shell (4).

11. A food product according to any preceding Claim, **characterised in that** the said continuous coating layer (16) is formed by a plurality of layers (10, 12, 14; 10a, 12a, 14a) of an edible fat or edible fat mixture.

12. A food product according to Claim 11, **characterised in that** the said continuous layer (16) is made up of edible fats selected from cocoa butter, Shea butter fractions, illipé, Sal oil, or mixtures thereof.

13. A food product according to Claims 11 or 12, **characterised in that** the said continuous coating layer (16) includes at least one bonding layer (14, 14a) of cocoa butter covered by one or more layers (10, 12; 10a, 12a) composed of a mixture of fats.

14. A food product according to any one of Claims 11 to 13, in which the said casing (2) includes a shaped shell and a lid (6) sealing the opening of the said shell (4) and in which the portion of coating layer (16) covering the shell (4) is obtained by at least two repeated operations, each involving pouring an edible fat into the shell, draining it and cooling it until the edible fat solidifies.

15. A food product according to Claim 14, in which the portion of the continuous coating layer (16) covering the lid (6) is obtained by at least two repeated operations, of spraying an edible fat and cooling it.

16. A process for preparing a food product according to Claim 1, comprising the steps of:
- providing a self-supporting shell (4) of chocolate material,
- applying to the inner surface of said shell (4) at least two coating layers (10, 12, 14) of an edible fat or mixture of edible fats, thereby to form a continuous inner coating (16),
- applying the moist filling (8) into said shell (4),
- applying at least two layers (10a, 12a, 14a) of an edible fat or mixture of edible fats onto the exposed surface of said filling (8) thereby to obtain a continuous coating connected to said continuous inner coating (16), and
- applying a lid (6) of edible moulding material to the opening of said shell thereby to seal said shell (4).

## Patentansprüche

1. Lebensmittelerzeugnis, umfassend einen Schokoladenüberzug, der eine feuchte Füllung (8) enthält, worin der Überzug (2) hermetisch verschlossen ist (4, 6) und wenigstens zwei kontinuierliche Überzugsschichten eines essbaren hydrophoben Fettmaterials (16) auf seiner gesamten inneren Oberfläche enthält, **dadurch gekennzeichnet, dass** die Füllung (8) eine Füllung auf Joghurtbasis mit einer Konzentration lebender und wachstumsfähiger Gärmittel von mehr als 10⁷ pro Gramm Füllung ist, nachdem das Lebensmittelerzeugnis bei einer Temperatur von 0 bis 4°C für einen Zeitraum von 4 bis 6 Wochen gelagert wurden, und **dadurch gekennzeichnet, dass** die Füllung (8) eine Wasseraktivität von mehr als 0,90 aufweist.

2. Lebensmittelerzeugnis gemäss Anspruch 1, in dem die Wasseraktivität zwischen 0,94 und 0,99 ist, und worin die anfängliche Wasseraktivität während der Lagerung des Lebensmittelerzeugnisses für 6 Wochen bei einer Temperatur von 0 bis 4°C im wesentlichen unverändert erhalten bleibt.

3. Lebensmittelerzeugnis gemäss Anspruch 1, **dadurch gekennzeichnet, dass** die Füllung auf Joghurtbasis Zucker in einer Menge von nicht mehr als 20 Gew.%, bezogen auf das Gesamtgewicht der Füllung, enthält.

4. Lebensmittelerzeugnis gemäss Anspruch 3, **dadurch gekennzeichnet, dass** der Zucker ausgewählt ist aus einer Gruppe bestehend aus Saccharose, Glucose, Fructose, Lactose oder Mischungen hiervon.

5. Lebensmittelerzeugnis gemäss Anspruch 4, **dadurch gekennzeichnet, dass** die Füllung Milchprotein in einer Menge von bis zu 8 Gew.%, bezogen auf das Gesamtgewicht der Füllmasse, enthält.

6. Lebensmittelerzeugnis gemäss einem der Ansprüche 1 bis 5, **dadurch gekennzeichnet, dass** die Füllung essbares, aus Milch erhaltenes Fett in einer Menge von nicht mehr als 10 Gew.% beinhaltet.

7. Lebensmittelerzeugnis gemäss einem der Ansprüche 1 bis 6, **dadurch gekennzeichnet, dass** die Füllung zusätzlich Süssstoffe, präbiotische Bestandteile, probiotische Bestandteile und/oder Aromastoffe enthält.

8. Lebensmittelerzeugnis gemäss Anspruch 7, **dadurch gekennzeichnet, dass** die präbiotischen Bestandteile lösliche Fasern beinhalten.

9. Lebensmittelerzeugnis gemäss einem der Ansprüche 1 bis 8, **dadurch gekennzeichnet, dass** die Füllung eine Viskosität von mehr als 3.000 cPs (Brookfield-Viscosimeter, Modell RVTD, Flügelrad 5) bei 6°C aufweist.

10. Lebensmittelerzeugnis gemäss einem der vorhergehenden Ansprüche, **dadurch gekennzeichnet, dass** der Überzug (2) einen geformten Mantel (4) und einen Deckel (6) beinhaltet, der die Öffnung des Mantels (4) verschliesst.

11. Lebensmittelerzeugnis gemäss einem der vorhergehenden Ansprüche, **dadurch gekennzeichnet, dass** die kontinuierliche Überzugsschicht (16) aus einer Vielzahl von Schichten (10, 12, 14; 10a, 12a, 14a) eines essbaren Fettes oder einer essbaren Fettmischung gebildet wird.

12. Lebensmittelerzeugnis gemäss Anspruch 11, **dadurch gekennzeichnet, dass** die kontinuierliche Schicht (16) aus essbaren Fetten, ausgewählt aus Kakaobutter, Sheabutterfraktionen, Illipé, Salöl oder Mischungen hiervon, hergestellt wird.

13. Lebensmittelerzeugnis gemäss Anspruch 11 oder 12, **dadurch gekennzeichnet, dass** die kontinuierliche Überzugsschicht (16) wenigstens eine Bindungsschicht (14, 14a) aus Kakaobutter enthält, die von einer oder mehreren aus einer Fettmischung zusammengesetzten Schichten (10, 12; 10a, 12a) bedeckt wird.

14. Lebensmittelerzeugnis gemäss einem der Ansprüche 11 bis 13, in dem der Überzug (2) einen geformten Mantel und einen Deckel (6) umfasst, der die Öffnung des Mantels (4) verschliesst und in dem der Teil der den Mantel (4) bedeckenden Überzugsschicht (16) durch wenigstens zwei wiederholte Arbeitsabläufe erhalten wird, die jeweils das Giessen eines essbaren Fettes in den Mantel, das Entleeren hiervon und das Abkühlen, bis das essbare Fett fest wird, beinhalten.

15. Lebensmittelerzeugnis gemäss Anspruch 14, in dem der Teil der kontinuierlichen Überzugsschicht (16), der den Deckel (6) bedeckt, durch wenigstens zwei wiederholte Arbeitsabläufe erhalten wird, in denen ein essbares Fett versprüht und abgekühlt wird.

16. Verfahren zur Herstellung eines Lebensmittelerzeugnisses gemäss Anspruch 1, umfassend die folgenden Schritte:
- Bereitstellen eines selbsttragenden Mantels (4) aus Schokoladenmaterial,
- Auftragen von wenigstens zwei Überzugsschichten (10, 12, 14) eines essbaren Fettes oder einer Mischung essbarer Fette auf die innere Oberfläche des Mantels (4), so dass ein kontinuierlicher innerer Überzug (16) gebildet wird,
- Einführen der feuchten Füllung (8) in den Mantel (4),
- Auftragen von wenigstens zwei Schichten (10a, 12a, 14a) eines essbaren Fettes oder einer Mischung aus essbaren Fetten auf die exponierte Oberfläche der Füllung (8), so dass ein kontinuierlicher, mit dem kontinuierlichen inneren Überzug (16) verbundener Überzug erhalten wird, und
- Auftragen eines Deckels (6) aus einem essbaren Formmaterial auf die Öffnung des Mantels, um den Mantel (4) zu verschliessen.

## Revendications

1. Produit alimentaire comportant une enveloppe en chocolat contenant une garniture humide (8), dans lequel ladite enveloppe (2) est scellée hermétiquement (4, 6) et comprend au moins deux couches continues de revêtement en matière grasse hydrophobe comestible (16) sur toute sa surface intérieure, **caractérisé en ce que** la garniture (8) est à base de yogourt avec une concentration de ferments lactiques vivants et viables de plus de 10⁷ par gramme de garniture après que le produit a été maintenu à une température de 0°C à 4°C pendant une période de quatre à six semaines, et **en ce que** ladite garniture (8) a une valeur d'activité d'eau de plus de 0,90.

2. Produit alimentaire selon la revendication 1, dans lequel ladite valeur d'activité d'eau est comprise entre 0,94 et 0,99, et dans lequel la valeur initiale d'activité d'eau est maintenue sensiblement inchangée pendant le stockage du produit alimentaire pendant six semaines à la température de 0 à 4°C.

3. Produit alimentaire selon la revendication 1, **caractérisé en ce que** ladite garniture à base de yogourt comprend des sucres, en quantités ne dépassant pas 20 % en poids du poids total de la garniture.

4. Produit alimentaire selon la revendication 3, **caractérisé en ce que** lesdits sucres sont choisis dans un groupe constitué du saccharose, du glucose, du fructose, du lactose ou de mélanges de ceux-ci.

5. Produit alimentaire selon la revendication 4, **caractérisé en ce que** ladite garniture comprend une protéine de lait en quantités s'élevant jusqu'à 8 % en poids, par rapport au poids total de la masse de la garniture.

6. Produit alimentaire selon l'une quelconque des revendications 1 à 5, **caractérisé en ce que** la garniture comprend une graisse comestible dérivée du lait en quantité non supérieure à 10 % en poids.

7. Produit alimentaire selon l'une quelconque des revendications 1 à 6, **caractérisé en ce que** ladite garniture comprend aussi des édulcorants, des ingrédients prébiotiques, des ingrédients probiotiques et/ou des agents aromatisants.

8. Produit alimentaire selon la revendication 7, **caractérisé en ce que** lesdits ingrédients prébiotiques comprennent des fibres solubles.

9. Produit alimentaire selon l'une quelconque des revendications 1 à 8, **caractérisé en ce que** ladite garniture a une valeur de viscosité de plus de 3000 cPs (viscosimètre Brookfield, modèle RVTD, hélice 5) à 6°C.

10. Produit alimentaire selon l'une quelconque des revendications précédentes, **caractérisé en ce que** ladite enveloppe (2) comprend une coque façonnée (4) et un couvercle (6) scellant de façon étanche l'ouverture de ladite coque (4).

11. Produit alimentaire selon l'une quelconque des revendications précédentes, **caractérisé en ce que** ladite couche de revêtement continue (16) est formée de plusieurs couches (10, 12, 14 ; 10a, 12a, 14a) d'une graisse comestible ou d'un mélange de graisses comestibles.

12. Produit alimentaire selon la revendication 11, **caractérisé en ce que** ladite couche continue (16) est constituée de graisses comestibles choisies parmi du beurre de cacao, des fractions de beurre de karité, de l'illipé, de l'huile de Sal ou des mélanges de ceux-ci.

13. Produit alimentaire selon les revendications 11 et 12, **caractérisé en ce que** ladite couche de revêtement continue (16) comprend au moins une couche de liaison (14, 14a) de beurre de cacao recouverte d'une ou plusieurs couches (10, 12 ; 10a, 12a) composées d'un mélange de graisses.

14. Produit alimentaire selon l'une quelconque des revendications 11 à 13, dans lequel ladite enveloppe (2) comprend une coque façonnée et un couvercle (6) scellant de façon étanche l'ouverture de ladite coque (4), et en ce que la partie de la couche de revêtement (16) recouvrant la coque (4) est obtenue par au moins deux opérations répétées, comprenant chacune le versement d'une graisse comestible dans la coque, son écoulement et son refroidissement jusqu'à ce que la graisse comestible se solidifie.

15. Produit alimentaire selon la revendication 14, dans lequel la partie de la couche de revêtement continue (16) recouvrant le couvercle (6) est obtenue par au moins deux opérations répétées de pulvérisation d'une graisse comestible et de son refroidissement.

16. Procédé pour préparer un produit alimentaire selon la revendication 1, comprenant les étapes qui consistent :
- à utiliser une coque autoportante (4) en matière à base de chocolat,
- à appliquer sur la surface intérieure de ladite coque (4) au moins deux couches de revêtement (10, 12, 14) d'une graisse comestible ou d'un mélange de graisses comestibles, formant ainsi un revêtement intérieur continu (16),
- à appliquer la garniture humide (8) dans ladite coque (4),
- à appliquer au moins deux couches (10a, 12a, 14a) d'une graisse comestible ou d'un mélange de graisses comestibles sur la surface à découvert de ladite garniture (8), de manière à obtenir un revêtement continu relié audit revêtement intérieur continu (16), et
- à appliquer un couvercle (6) de matière comestible de moulage sur l'ouverture de ladite coque pour sceller ainsi de façon étanche ladite coque (4).
